# EUROPEAN PATENT APPLICATION

(11) **EP 4 379 909 A1**
(43) Date of publication of application: **05.06.2024**
(21) Application number: 22919064.0
(22) Date of filing: 20.12.2022
(51) Int. Cl.: H01M 10/6556, H01M 50/202, H01M 50/244, H01M 10/613, H01M 50/249

(54) **BATTERY MODULE, AND BATTERY PACK AND VEHICLE COMPRISING SAME**

(30) Priority: 04.01.2022 KR 20220001137
(71) Applicant: LG Energy Solution, Ltd., Seoul 07335 (KR)
(72) Inventor: HWANG, Sung-Tack, Daejeon 34122 (KR); KIM, Bo-Sung, Daejeon 34122 (KR)
(74) Representative: Plasseraud IP
(86) International application number: PCT/KR2022/020892
(87) International publication number: WO 2023/132527

(57) **Abstract**

A battery module, and a battery pack and a vehicle including the same are disclosed. A battery module according to an embodiment of the present disclosure includes a plurality of battery cells; a case in which the plurality of battery cells are accommodated; a cover coupled to the case; at least one cooling block coupled to the cover and in contact with the case to cool the battery cell; and a cooling pipe coupled to the cooling block, wherein the cooling block has a variable coupling position in the cover.

## Description

### TECHNICAL FIELD

The present application claims priority to Korean Patent Application No. 10-2022-0001137 filed on January 4, 2022, the disclosures of which are incorporated herein by reference.

The present disclosure relates to a battery module, and a battery pack and a vehicle including the same, and more specifically, to a battery module having a variably disposed cooling block, and a battery pack and a vehicle including the same.

### BACKGROUND ART

As the technology development and demand for mobile devices increase, demand for secondary batteries as an energy source is rapidly increasing, and nickel cadmium batteries or hydrogen ion batteries have been used as conventional secondary batteries, but recently, lithium secondary batteries that have almost no memory effect compared to nickel-based secondary batteries and thus have advantages of free charge/discharge, very low self-discharge rate, and high energy density, are widely used.

These lithium secondary batteries mainly use a lithium-based oxide and a carbon material as a positive electrode active material and a negative electrode active material, respectively. A lithium secondary battery includes an electrode assembly in which a positive electrode plate and a negative electrode plate coated with the positive electrode active material and the negative electrode active material, respectively, are disposed with a separator therebetween, and an exterior material that seals and accommodates the electrode assembly together with an electrolyte, that is, a battery case.

A lithium secondary battery is composed of a positive electrode, a negative electrode, a separator interposed therebetween and an electrolyte, and is classified into a lithium-ion battery (LIB), a polymer lithium-ion battery (PLIB), and the like depending on which a positive electrode active material and a negative electrode active material are used. Typically, electrodes of these lithium secondary batteries are formed by coating a positive electrode or negative electrode active material on a current collector, such as an aluminum or copper sheet, mesh, film, foil, or the like, and then drying the same. In addition, various types of secondary batteries are provided with a case capable of protecting battery cells, and include a battery module in which a plurality of battery cells are stacked and inserted into the case, and a battery pack including a plurality of battery modules.

Meanwhile, a cooling pipe through which water or air moves may be installed in the battery module to cool the battery cell. Here, the battery cell may be stacked or accommodated in a case in various ways, but the cooling pipe for cooling is fixed although there is a difference in the portion where heat is generated depending on the stacking or accommodating method of the battery cells, and thus there is a problem of being difficult to cope with this.

In addition, the battery module may include electrical components related to electricity, and in the case of electrical components in the prior art, a cooling device is not provided or cooling is simply performed using a cooling fan although heat is generated, whereby there is a problem in that cooling efficiency is low.

### DISCLOSURE

### Technical Problem

The present disclosure is designed to solve the problems of the related art, and therefore the present disclosure is directed to providing a battery module capable of cooling battery cells or electrical components even when the arrangement position of the battery cells or electrical components is changed, and a battery pack and a vehicle including the same.

### Technical Solution

According to one aspect of the present disclosure, there may be provided a battery module including a plurality of battery cells; a case in which the plurality of battery cells are accommodated; a cover coupled to the case; at least one cooling block coupled to the cover and in contact with the case to cool the battery cell; and a cooling pipe coupled to the cooling block, wherein the cooling block has a variable coupling position in the cover.

In one aspect, at least one block coupling groove to which the cooling block is coupled may be formed in the cover.

Preferably, the block coupling groove may be formed by a first partition wall protruding upward in the horizontal direction from the bottom of the cover and a second partition wall protruding upward in the vertical direction so as to intersect with the first partition wall.

Preferably, the first partition wall and the second partition wall may be configured to be orthogonal to each other.

Preferably, the first partition wall and the second partition wall may be provided in plurality, a plurality of first partition walls and a plurality of second partition walls may intersect to form a plurality of block coupling grooves, and the cooling block may be coupled to at least one of the plurality of block coupling grooves.

In another aspect, the cooling pipe may include a first pipe portion located outside the cooling block; and a second pipe portion extending from the first pipe portion and located inside the cooling block.

Preferably, the second pipe portion may be formed in a shape close to "U".

Meanwhile, according to another aspect of the present disclosure, there may be provided a battery module including a plurality of battery cells; a case in which the plurality of battery cells are accommodated; an electrical member coupled to the case; an electrical cooling block disposed on the electrical member so as to cool an electrical component; and an electrical cooling pipe coupled to the electrical cooling block, wherein the electrical cooling block has a variable coupling position in the electrical member.

In one aspect, the electrical member may include an electrical case in which the electrical component is accommodated; and an electrical cover coupled to the electrical case, wherein at least one electrical block coupling groove to which the electrical cooling block is coupled may be formed in the electrical cover.

In another aspect, the electrical cooling pipe may include a first pipe portion located outside the electrical cooling block; and a second pipe portion extending from the first pipe portion and located inside the electrical cooling block.

Preferably, the second pipe portion may be formed in a shape close to "U".

Meanwhile, according to still another aspect of the present disclosure, there may be provided a battery pack including the above-described battery module, and there may also be provided a vehicle including the above-described battery module.

### Advantageous Effects

According to embodiments of the present disclosure, the cooling block is variably configured, and thus there is an effect of cooling battery cells or electrical components even when the arrangement position of the battery cells or electrical components is changed.

### DESCRIPTION OF DRAWINGS

FIG. 1 is an overall perspective view of a battery module according to a first embodiment of the present disclosure.
FIG. 2 is an exploded perspective view of FIG. 1.
FIG. 3 is a cross-sectional view taken along line A-A' of FIG. 1.
FIG. 4 is a perspective view of a cooling block in a battery module according to a first embodiment of the present disclosure.
FIG. 5 is an exploded perspective view of an electrical member included in a battery module according to a second embodiment of the present disclosure.
FIGS. 6 and 7 are plan views of cooling blocks variously disposed in an electrical member of a battery module according to a second embodiment of the present disclosure.
FIG. 8 is a perspective view showing a lower surface of an electrical member provided in a battery module according to a second embodiment of the present disclosure.

### BEST MODE

Hereinafter, preferred embodiments of the present disclosure will be described in detail with reference to the accompanying drawings. It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

As used herein, the term 'coupling' or 'connection' refers to not only a case where one member and another member are directly coupled or directly connected, but also a case where one member is indirectly coupled or indirectly connected to another member through a joint member.

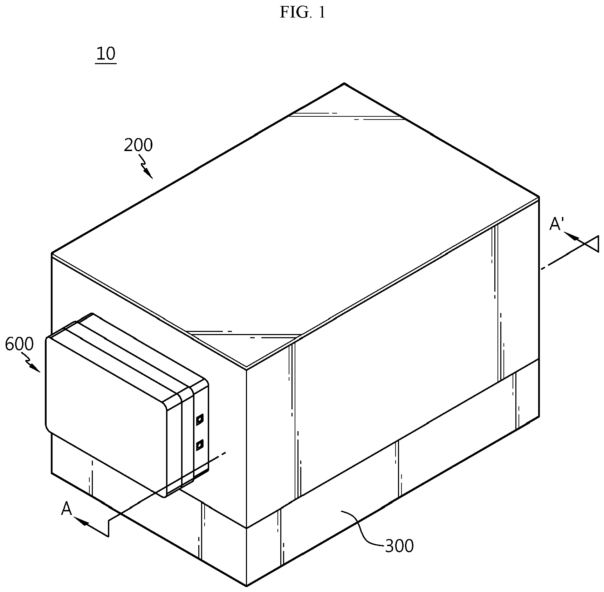

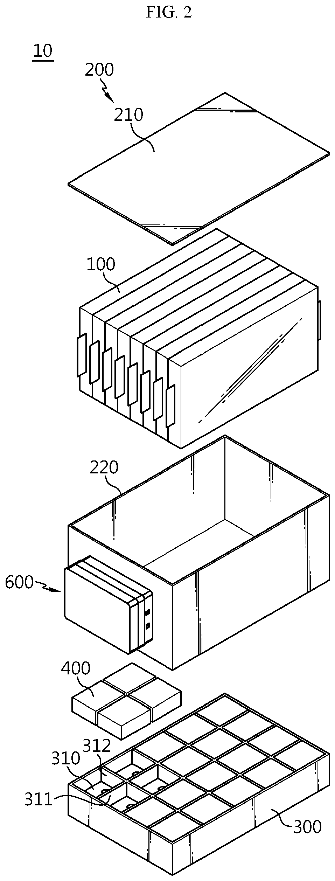

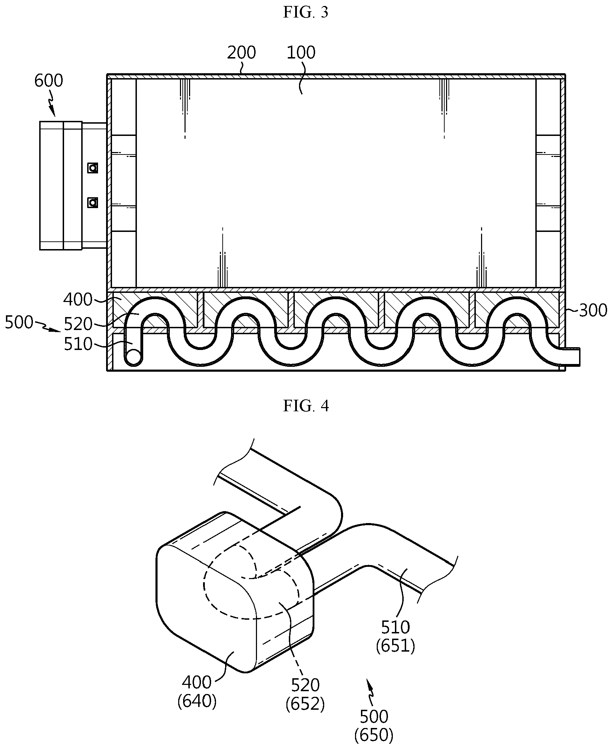

FIG. 1 is an overall perspective view of a battery module according to a first embodiment of the present disclosure, FIG. 2 is an exploded perspective view of FIG. 1, FIG. 3 is a cross-sectional view taken along line A-A' of FIG. 1, and FIG. 4 is a perspective view of a cooling block in a battery module according to a first embodiment of the present disclosure.

Referring to the drawings, the battery module 10 according to the first embodiment of the present disclosure includes a battery cell 100, a case 200, a cover 300, a cooling block 400, and a cooling pipe 500.

Referring to FIGS. 1 and 2, a plurality of battery cells 100 are accommodated and protected inside the case 200. Here, the battery cell 100 may be various. For example, the battery cell 100 may be provided as a pouch-type battery cell 100 or as a cylindrical battery cell 100.

The battery cell 100 is provided with an electrode lead, and the electrode lead provided in the battery cell 100 is a type of terminal connected to an external device and may be made of a conductive material.

The electrode lead may include a positive electrode lead and a negative electrode lead. The positive electrode lead and the negative electrode lead may be disposed in opposite directions with respect to the length direction of the battery cell 100, or the positive electrode lead and the negative electrode lead may be located in the same direction with respect to the length direction of the battery cell 100.

The positive electrode lead and the negative electrode lead may be made of various materials, and for example, the positive electrode lead may be made of an aluminum material and the negative electrode lead may be made of a copper material.

The electrode lead may be electrically coupled to the bus bar. The battery cell 100 may have a structure in which a unit cell arranged in the order of positive electrode plate-separator-negative electrode plate or a bi-cell arranged in the order of positive electrode plate-separator-negative electrode plate-separator-positive electrode plate-separator-negative electrode plate are stacked in plurality according to battery capacity.

The plurality of battery cells 100 may be accommodated inside the case 200 in various ways, for example, the plurality of battery cells 100 may be stacked on each other and accommodated in the form of a battery cell stack. Here, the battery cell 100 may have various structures, and the plurality of battery cells 100 may be stacked in various methods.

The battery cell stack may include a plurality of cartridges (not shown) accommodating each battery cell 100. Each cartridge (not shown) may be manufactured by plastic injection molding, and a plurality of cartridges (not shown) formed with an accommodation portion capable of accommodating the battery cell 100 may be stacked.

A cartridge assembly in which a plurality of cartridges (not shown) are stacked may include a connector element or a terminal element. The connector element may include, for example, various types of electrical connection components or connection members for being connected to a battery management system (BMS, not shown) capable of providing data on the voltage or temperature of the battery cell 100.

Also, the terminal element includes a positive electrode terminal and a negative electrode terminal as a main terminal connected to the battery cell 100.

Referring to FIGS. 1 and 2, the case 200 accommodates a plurality of battery cells 100, for example, a battery cell stack or a cartridge assembly in which the battery cell stack is accommodated.

The case 200 may be provided in various ways, and may include, for example, an upper case 210 and a lower case 230 as shown in FIG. 2. However, this is only one embodiment, and the case 200 may be provided in more various ways.

Here, the case 200 may be provided to surround a battery cell stack or a cartridge assembly in which the battery cell stack is accommodated. That is, the case 200 surrounds the entire battery cell 100, thereby protecting the battery cell 100 from external vibration or impact.

The case 200 may be formed in a shape corresponding to the shape of the battery cell 100, for example, a battery cell stack or a cartridge assembly. For example, when the battery cell stack or the cartridge assembly is provided in a hexahedral shape, the case 200 may also be provided in a hexahedral shape to correspond thereto.

The cover 300 is coupled to the case 200. Referring to FIGS. 1 and 2, the cover 300 may be coupled to the lower side of the case 200. However, the coupling portion of the cover 300 may be various.

At least one block coupling groove 310 to which the cooling block 400 is coupled may be formed in the cover 300. Here, the block coupling groove 310 may be formed in various ways. For example, the block coupling groove 310 may be formed by the first partition wall 311 and the second partition wall 312.

Here, the first partition wall 311 may protrude upward in the horizontal direction from the bottom of the cover 300. Also, the second partition wall 312 may protrude upward in the vertical direction so as to intersect with the first partition wall 311. That is, the first partition wall 311 in the horizontal direction and the second partition wall 312 in the vertical direction may intersect to form the block coupling groove 310. Referring to FIG. 2, the first partition wall 311 and the second partition wall 312 are configured to be orthogonal to each other, but are not limited thereto.

Referring to FIG. 2, the first partition wall 311 and the second partition wall 312 may be provided in plurality, and the plurality of first partition walls 311 and the plurality of second partition walls 312 may intersect to form a plurality of block coupling grooves 310. In addition, one or more cooling blocks 400 may be provided and coupled to at least one of the plurality of block coupling grooves 310.

As described above, the cooling block 400 may be disposed in any block coupling groove 310 among the plurality of block coupling grooves 310, and thus the cooling block 400 may be installed to correspond to the arrangement shape of the battery cells 100 stacked in the case 200, whereby there is an effect of sufficiently cooling the battery cells 100 arranged in various ways.

On the other hand, in another embodiment of the block coupling groove 310, the block coupling groove 310 may be formed to be inserted downward from the bottom of the cover 300.

The cooling block 400 is composed of one or more, and may be variously coupled to any block coupling groove 310 among the plurality of block coupling grooves 310 formed in the cover 300. Also, the cooling block 400 is in contact with the case 200 while being coupled to the block coupling groove 310 to cool the battery cell 100. The cooling pipe 500 is coupled to the cooling block 400 and air or water flows through the cooling pipe 500, and thus when the cooling block 400 is in contact with the case 200, heat may be transferred to the battery cell 100 accommodated in the case 200.

Since the cooling block 400 may be disposed in any block coupling groove 310 among the plurality of block coupling grooves 310 formed in the cover 300, the coupling position in the cover 300 is variable. That is, the cooling block 400 may be variably configured in various ways to correspond to the arrangement position or stacking shape of the battery cells 100.

The cooling block 400 may be configured to be inserted into the block coupling groove 310, and the shape of the cooling block 400 may be formed to correspond to the shape of the block coupling groove 310. For example, the cooling block 400 may have a hexahedral shape, but the shape of the cooling block 400 is not limited thereto.

The cooling block 400 may transfer cold air from the fluid flowing through the cooling pipe 500 to the battery cell 100, thereby cooling the battery cell 100. The cooling block 400 may be made of a plastic-based injection molding material or aluminum.

When the cooling block 400 is made of a plastic-based injection molding material, a second pipe to be described later may be located inside the cooling block 400. Alternatively, when the cooling block 400 is made of aluminum by, for example, die casting, a pipe-shaped connection groove may be formed inside the cooling block 400. However, this is only one embodiment.

The cooling pipe 500 is coupled to the cooling block 400, and a fluid such as water or air moves through the inside of the cooling pipe 500. A fluid such as water or air cools the battery cell 100 through the cooling block 400 and the case 200 while moving through the cooling pipe 500. However, the fluid for cooling the battery cell 100 is not limited to water or air.

Referring to FIGS. 3 and 4, the cooling pipe 500 may include a first pipe portion 510 and a second pipe portion 520. The first pipe portion 510 is located outside the cooling block 400. Also, the second pipe portion 520 extends from the first pipe portion and is located inside the cooling block 400. As shown in FIG. 4, the second pipe portion 520 may be formed in a shape close to "U", but the shape of the second pipe portion 520 is not limited thereto.

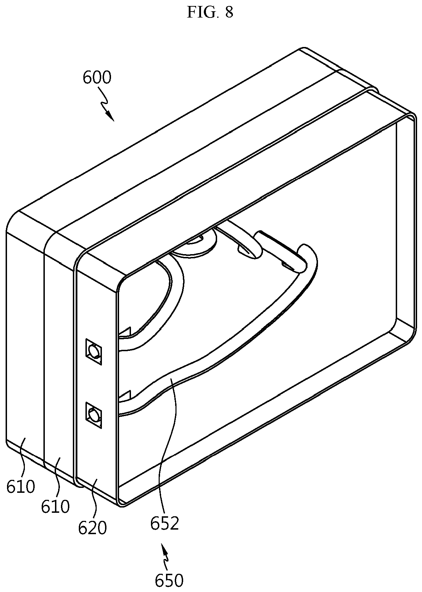

The cooling pipe 500 may be configured to connect all of the plurality of cooling blocks 400. Although the electrical cooling pipe 650 for cooling the electrical member 600 is shown in the case of FIG. 8 corresponding to the second embodiment, the cooling pipe 500 of the first embodiment for cooling the battery cell 100 is also common thereto, and thus FIG. 8 may also be referred to for the cooling pipe 500 of the first embodiment.

The cooling pipe 500 may be made of various materials, for example, silicon or rubber. However, the material of the cooling pipe 500 is not limited thereto.

Hereinafter, the operation and effect of the battery module 10 according to the first embodiment of the present disclosure will be described with reference to the drawings.

A case 200 in which a plurality of battery cells 100 are accommodated is coupled to a cover 300, and block coupling grooves 310 are formed in the cover 300 so that one or more cooling blocks 400 may be coupled to any position of the plurality of block coupling grooves 310.

In addition, the cooling pipe 500 is coupled to the cooling block 400 so that a fluid for cooling flows through the cooling pipe 500. The cooling block 400 is in contact with the case 200 and cools the plurality of battery cells 100 accommodated in the case 200.

Here, the plurality of battery cells 100 may be disposed or stacked in the case 200 in various methods, and when the arrangement of the plurality of battery cells 100 is changed, the position of the cooling block 400 coupled to the block coupling groove 310 may be changed, whereby there is an effect of efficiently cooling the battery cell 100 having a changed arrangement.

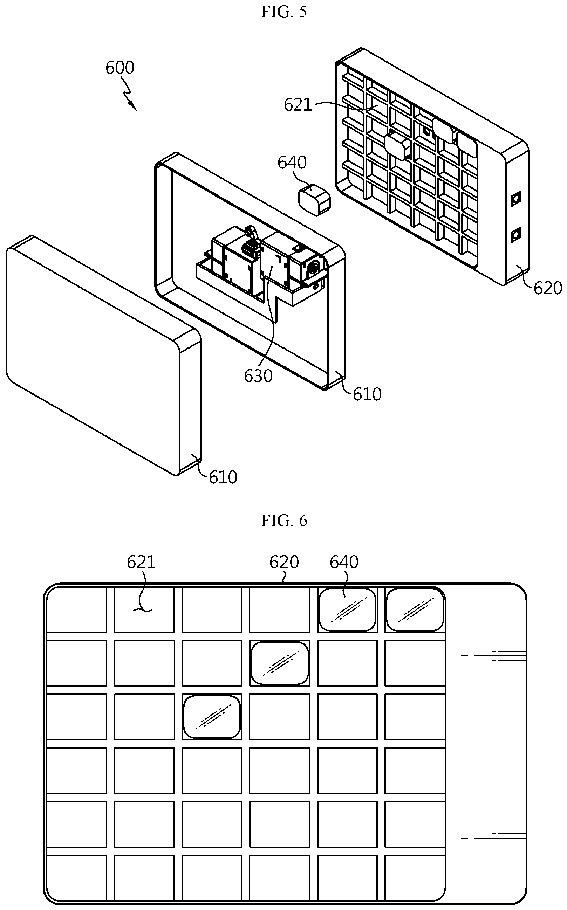

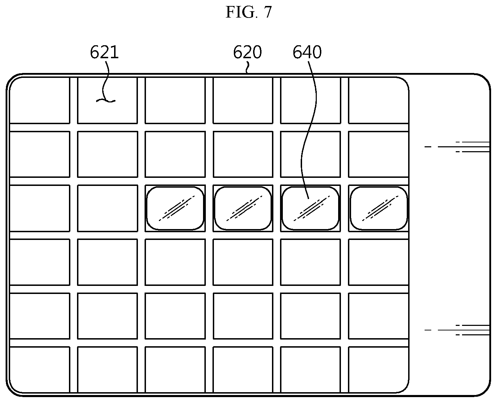

FIG. 5 is an exploded perspective view of an electrical member included in a battery module according to a second embodiment of the present disclosure, FIGS. 6 and 7 are plan views of cooling blocks variously disposed in an electrical member of a battery module according to a second embodiment of the present disclosure, and FIG. 8 is a perspective view showing a lower surface of an electrical member provided in a battery module according to a second embodiment of the present disclosure.

Hereinafter, cooling of the electrical member 600 provided in the battery module 10 will be described, but a description of portions common to the cooling method of the battery cell 100 in the above-described first embodiment is replaced with the above-described description.

Referring to FIG. 5, an electrical member 600 refers to a member provided with electrical components 630 related to electricity, such as a relay and a bus bar, and heat is generated by electricity. Therefore, the electrical member 600 also needs to be cooled.

A description of the plurality of battery cells 100 and the case 200 in which the plurality of battery cells 100 are accommodated is replaced with the description of the first embodiment described above. However, the structure for cooling the battery cell 100 in the second embodiment may be the same as that of the first embodiment described above, or may be provided to cool the battery cell 100 in a different method.

The electrical member 600 is coupled to various portions of the case 200. For example, the electrical member 600 may be coupled to the outer side surface of the case 200 as shown in FIG. 1. In addition, the electrical member 600 may be coupled to the inside of the case 200, although not shown in the drawings.

The electrical member 600 may be configured to include an electrical case 610 and an electrical cover 620. Various electrical components 630 are accommodated in the electrical case 610, thereby protecting the electrical components 630 from external impact. Also, the electrical cover 620 is coupled to the electrical case 610. At least one electrical block coupling groove 621 to which the electrical cooling block 640 is coupled is formed in the electrical cover 620.

The electrical cooling block 640 of the second embodiment has a difference in the cooling target from the cooling block 400 of the first embodiment for cooling the battery cell 100 in that it cools the electrical component 630, but since the basic configuration of the electrical cover 620, the electrical cooling block 640, and the electrical block coupling groove 621 is common to that of the cover 300, the cooling block 400, and the block coupling groove 310 described in the first embodiment, the description thereof is replaced with the above-described description.

However, as the cooling block 400 is coupled to the block coupling groove 310 at various locations according to various arrangements of the plurality of battery cells 100 in the first embodiment, so may the electric cooling block 640 be coupled to the block coupling groove 310 at various locations according to the arrangement form of the electrical component 630 provided in the electrical member 600 in the second embodiment. For example, as shown in FIGS. 6 and 7, the electrical cooling block 640 is coupled to any electrical block coupling groove 621 among the plurality of electrical block coupling grooves 621, whereby the arrangement of the electrical cooling block 640 may be modified in various ways.

That is, there is a difference in that the cooling block 400 cools the plurality of battery cells 100 in the first embodiment, and the electrical cooling block 640 cools the electrical component 630 provided in the electrical member 600 in the second embodiment, that is, a difference in the object of cooling, but the other basic configuration is common.

Here, the electrical cooling block 640 is disposed on the electrical cover 620 of the electrical member 600 to cool the electrical component 630 and is configured to have a variable coupling position in the electrical cover 620.

The electrical cooling pipe 650 is coupled to the electrical cooling block 640. Referring to FIGS. 4 to 8, the electrical cooling pipe 650 includes a first pipe portion 651 located outside the electrical cooling block 640, and a second pipe portion 652 extending from the first pipe portion and located inside the electrical cooling block 640. Since the second pipe portion 652 is in common with the cooling pipe 500 of the first embodiment in that it is formed in a shape close to "U", a description thereof is replaced with the above-described description with reference to FIG. 4.

That is, the electrical component 630 in the electrical member 600 may be disposed in the electrical case 610 in various ways in the case of the second embodiment, but when the arrangement of the electrical component 630 is changed, the position of the electrical cooling block 640 coupled to the electrical block coupling groove 621 may also be changed, whereby there is an effect of efficiently cooling the electrical component 630 having a changed arrangement.

Meanwhile, a battery pack (not shown) according to an embodiment of the present disclosure may include one or more battery modules 10 according to an embodiment of the present disclosure as described above. Also, the battery pack (not shown) may further include, in addition to the battery module 10, a housing for accommodating the battery module 10 and various devices for controlling charge/discharge of the battery module 10, such as a BMS, a current sensor, a fuse, and the like.

Meanwhile, a vehicle (not shown) according to an embodiment of the present disclosure may include the battery module 10 or the battery pack (not shown) as described above, and the battery module 10 may be included in the battery pack (not shown). In addition, the battery module 10 according to an embodiment of the present disclosure may be applied to the vehicle (not shown), for example, a predetermined vehicle (not shown) provided to use electricity such as an electric vehicle or a hybrid vehicle.

While the present disclosure has been hereinabove described with regard to a limited number of embodiments and drawings, the present disclosure is not limited thereto and it is obvious to those skilled in the art that a variety of modifications and changes may be made thereto within the technical aspects of the present disclosure and the equivalent scope of the appended claims.

### INDUSTRIAL APPLICABILITY

The present disclosure relates to a battery module, and a battery pack and a vehicle including the same, and is particularly applicable to industries related to secondary batteries.

## Claims

1. A battery module comprising:
a plurality of battery cells;
a case in which the plurality of battery cells are accommodated;
a cover coupled to the case;
at least one cooling block coupled to the cover and in contact with the case to cool the battery cell; and
a cooling pipe coupled to the cooling block,
wherein the cooling block has a variable coupling position in the cover.

2. The battery module according to claim 1,
wherein at least one block coupling groove to which the cooling block is coupled is formed in the cover.

3. The battery module according to claim 2,
wherein the block coupling groove is formed by a first partition wall protruding upward in the horizontal direction from the bottom of the cover and a second partition wall protruding upward in the vertical direction so as to intersect with the first partition wall.

4. The battery module according to claim 3,
wherein the first partition wall and the second partition wall are configured to be orthogonal to each other.

5. The battery module according to claim 4,
wherein the first partition wall and the second partition wall are provided in plurality,
a plurality of first partition walls and a plurality of second partition walls intersect to form a plurality of block coupling grooves, and
the cooling block is coupled to at least one of the plurality of block coupling grooves.

6. The battery module according to claim 1,
wherein the cooling pipe comprises:
a first pipe portion located outside the cooling block; and
a second pipe portion extending from the first pipe portion and located inside the cooling block.

7. The battery module according to claim 6,
wherein the second pipe portion is formed in a shape close to "U".

8. A battery module comprising:
a plurality of battery cells;
a case in which the plurality of battery cells are accommodated;
an electrical member coupled to the case;
an electrical cooling block disposed on the electrical member so as to cool an electrical component; and
an electrical cooling pipe coupled to the electrical cooling block,
wherein the electrical cooling block has a variable coupling position in the electrical member.

9. The battery module according to claim 8,
wherein the electrical member comprises:
an electrical case in which the electrical component is accommodated; and
an electrical cover coupled to the electrical case,
wherein at least one electrical block coupling groove to which the electrical cooling block is coupled is formed in the electrical cover.

10. The battery module according to claim 8,
wherein the electrical cooling pipe comprises:
a first pipe portion located outside the electrical cooling block; and
a second pipe portion extending from the first pipe portion and located inside the electrical cooling block.

11. The battery module according to claim 10,
wherein the second pipe portion is formed in a shape close to "U".

12. A battery pack comprising a battery module according to any one of claims 1 to 11.

13. A vehicle comprising a battery module according to any one of claims 1 to 11.
